# EUROPEAN PATENT SPECIFICATION

(11) **EP 4 614 304 B1**
(45) Date of publication and mention of the grant of the patent: **11.02.2026**
(21) Application number: 24196366.9
(22) Date of filing: 26.08.2024
(51) Int. Cl.: G06F 3/12

(54) **INFORMATION PROCESSING SYSTEM, INFORMATION PROCESSING PROGRAM, AND INFORMATION PROCESSING METHOD**
INFORMATIONSVERARBEITUNGSSYSTEM, INFORMATIONSVERARBEITUNGSPROGRAMM UND INFORMATIONSVERARBEITUNGSVERFAHREN
SYSTÈME DE TRAITEMENT D'INFORMATIONS, PROGRAMME DE TRAITEMENT D'INFORMATIONS ET PROCÉDÉ DE TRAITEMENT D'INFORMATIONS

(30) Priority: 07.03.2024 JP 2024035288
(43) Date of publication of application: 10.09.2025
(73) Proprietor: FUJIFILM Business Innovation Corp., Minato-ku Tokyo (JP)
(72) Inventor: KOMAZAWA, Hisao, Yokohama-shi, Kanagawa (JP)
(74) Representative: Kurig, Thomas

(56) References cited:
- JP-A- 2022 148 533
- US-A1- 2022 283 749

## Description

### BACKGROUND OF THE INVENTION

### (i) Field of the Invention

The present invention relates to an information processing system, an information processing program, and an information processing method.

### (ii) Description of Related Art

JP2021-165020A discloses an inspection system that inspects the quality of a printed material, the inspection system including an inspection unit that inspects the quality of the printed material based on a comparison between a scan image obtained by scanning the printed material and a standard image, a display control unit that displays a screen for receiving a first mode in which a discharge destination of the printed material is not switched regardless of an inspection result of the printed material, or a second mode in which the discharge destination of the printed material is switched according to the inspection result of the printed material, a reception unit that receives the first mode in which the discharge destination of the printed material is not switched regardless of the inspection result of the printed material, or the second mode in which the discharge destination of the printed material is switched according to the inspection result of the printed material, via the screen, and a control unit that controls the discharge destination of the printed material based on the inspection result obtained by the inspection performed by the inspection unit and the mode received by the reception unit.

JP2022-146528A discloses an inspection device that inspects a printed material by comparing a standard image with a printed material that has been printed, the inspection device including a control unit that exclusively controls, as the inspection mode of the inspection, a mode for switching the paper discharge destination of a printed material in which a defect is found, and an inspection job for inspecting a printed material, with a plurality of printed materials as one set, or an inspection type for inspecting printed materials having an order.

JP2022-148533A discloses a printing system including a printing unit that performs a printing process based on a print job, on a page basis, and an inspection unit that inspects the presence or absence of a print defect on a printed sheet by comparing a read image obtained by reading an image on the printed sheet of a page printed based on the print job with a normal image registered in association with the print job, in which the print job includes setting information for an operation mode that specifies the printing operation in a case where a print defect is detected in the inspection, and the printing unit determines which page of the pages specified in the print job is to be printed next, in a case where the print defect is detected in the inspection, according to the operation mode indicated by the setting information.

### SUMMARY OF THE INVENTION

An object of the present invention is to reduce the amount of the printed material to be discarded, in a case of performing continuous printing of a plurality of printed materials while the printing quality is inspected, and a printed material having an inspection result of fail is generated, as compared with a case where the continuous printing is resumed from the failed printed material. The present invention is provided in the appended claims. The flowing disclosure serves a better understanding of the present invention.

### BRIEF DESCRIPTION OF THE DRAWINGS

Exemplary embodiment(s) of the present invention will be described in detail based on the following figures, wherein:
Fig. 1 is a diagram showing a schematic configuration of an image forming system according to an exemplary embodiment;
Fig. 2 is a diagram illustrating an operation of the image forming system shown in Fig. 1;
Fig. 3 is a diagram illustrating an operation of the image forming system shown in Fig. 1;
Fig. 4 is a block diagram showing a hardware configuration of the image forming system shown in Fig. 1;
Fig. 5 is a functional block diagram of the image forming system shown in Fig. 1;
Fig. 6 is a diagram illustrating an operation of the image forming system shown in Fig. 1;
Fig. 7 is a diagram illustrating an operation of the image forming system shown in Fig. 1;
Fig. 8 is a diagram illustrating an operation of the image forming system shown in Fig. 1; and
Fig. 9 is a flowchart showing a flow of a print inspection process of the image forming system shown in Fig. 1.

### DETAILED DESCRIPTION OF THE INVENTION

Hereinafter, an exemplary embodiment will be described with reference to the drawings.

### (Overview of Image Forming System)

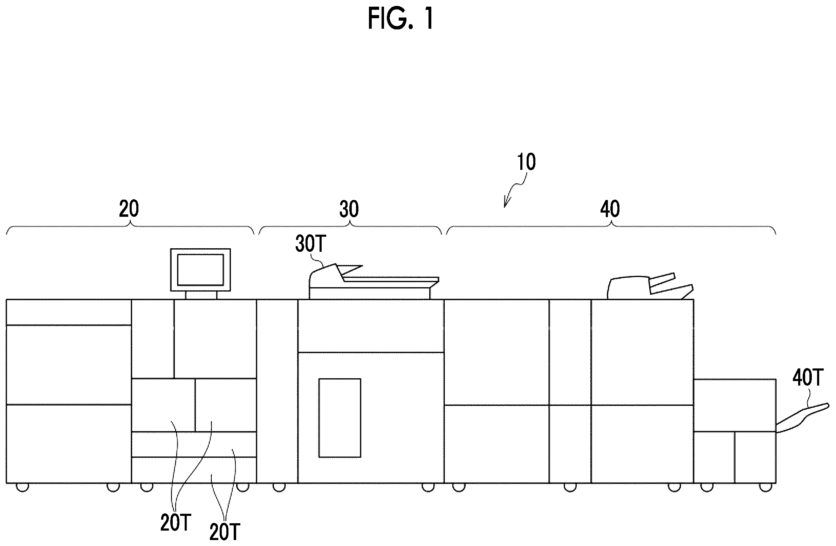

Fig. 1 shows an image forming system 10 according to an exemplary embodiment. The image forming system 10 includes a printing device 20, an inspection device 30, and a post-processing device 40. The image forming system 10 is an example of an information processing system and an information processing apparatus.

### (Printing Device)

The printing device 20 includes a plurality of accommodation trays 20T for accommodating paper. The printing device 20 has a printing function of printing an image on paper supplied from any accommodation tray 20T, among the plurality of accommodation trays 20T. The paper is an example of a recording medium, and the accommodation tray 20T is an example of an accommodation unit.

### (Inspection Device)

The inspection device 30 has an inspection function of receiving the paper on which the image is printed from the printing device 20 and inspecting the printing quality of the received printed paper (printed material). The inspection device 30 determines whether or not there is an abnormality such as corner folding, contamination of printing, or misalignment in the printed material received from the printing device 20.

Specifically, the inspection device 30 includes a purge tray 30T that discharges the printed material. The inspection device 30 receives a standard image (normal image), such as a rasterized image, generated on the basis of image data to be printed on the paper, from the printing device 20. In addition, the inspection device 30 scans the image of the printed material received from the printing device 20. Then, the inspection device 30 collates the standard image received from the printing device 20 with an inspection image such as a rasterized image based on the scanned image and determines whether or not there is an abnormality in the printed material.

As a result, in a case where it is determined that there is an abnormality in the printed material, the inspection device 30 sets the inspection result to fail and discharges the printed material to the purge tray 30T. On the other hand, in a case where it is determined that there is no abnormality in the printed material, the inspection device 30 supplies the printed material into the post-processing device 40 by setting the inspection result as pass. The purge tray 30T is an example of a fail discharge unit.

### (Post-Processing Device)

The post-processing device 40 executes various types of post-processes, such as a folding process, a stapling process, a punch hole process, and a booklet making process, on the printed material inspected by the inspection device 30, and discharges the post-processed printed material into the predetermined discharge tray 40T. The processing contents of the post-processing device 40 can be changed as appropriate. In addition, the discharge tray 40T is an example of a pass discharge unit.

### (Continuous Printing)

The image forming system 10 has a continuous printing function. In this continuous printing, for example, a plurality of continuous printed materials are continuously printed while the printing quality is inspected. Specifically, in the continuous printing, the printing device 20 prints the image on each of the plurality of sheets of paper supplied in sequence from the accommodation tray 20T, and the inspection device 30 sequentially inspects the printed material on which the image is printed. In the inspection device 30, the printed material having the inspection result of pass is subjected to post-processing in the post-processing device 40 and is discharged into the predetermined discharge tray 40T.

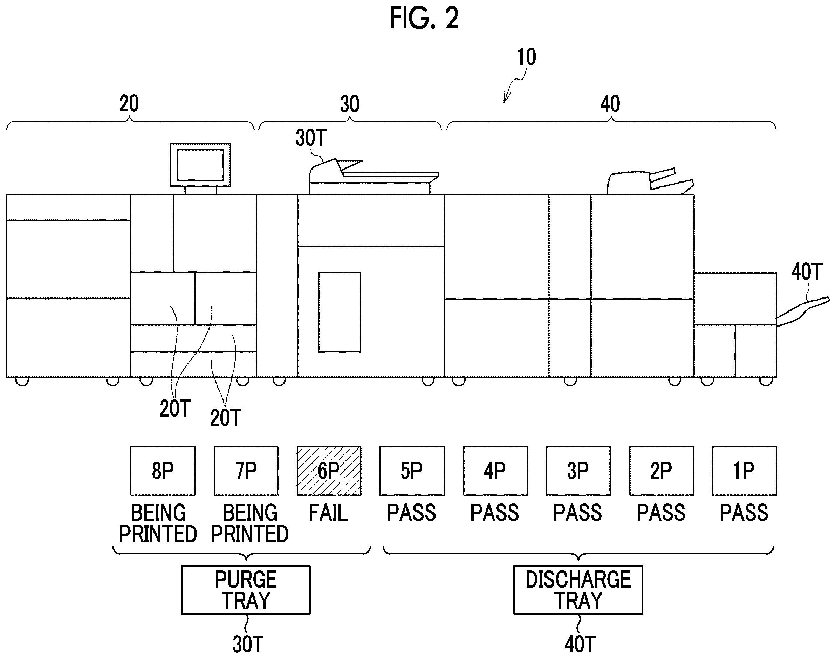

Here, as shown in Fig. 2, during continuous printing, in a case where a printed material having an inspection result by the inspection device 30 of fail is generated (printed material of 6p), not only the failed printed material but also the printed materials (printed materials of 7p and 8p) being printed following the failed printed material, that is, all the sheets of paper on the paper transport path from the accommodation tray 20T to the inspection by the inspection device 30 are discharged to the purge tray 30T.

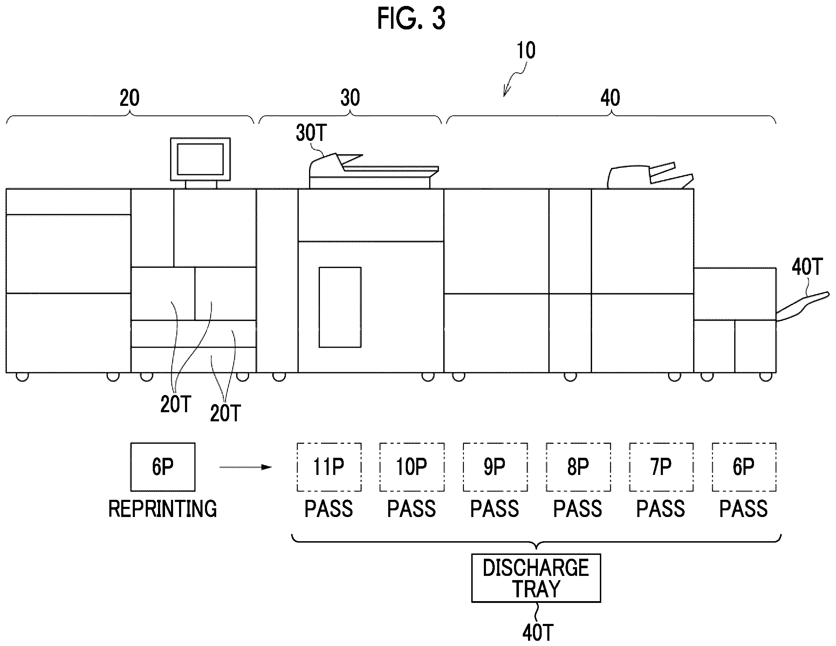

Thereafter, as shown in Fig. 3, the continuous printing (reprinting) is resumed from the printed material (printed material of 6p) having the inspection result by the inspection device 30 of fail. Then, as shown by the two-dot chain line in Fig. 3, the reprinted material (printed material of 6p) that has passed the quality inspection by the inspection device 30 and the subsequent printed materials (printed materials of 7p to 11p) following the reprinted material are discharged to the discharge tray 40T of the post-processing device 40. In a case where a printed material having an inspection result by the inspection device 30 of fail is generated, only the failed printed material (printed material of 6p) is discharged to the purge tray 30T, and in a case where the printed materials (printed materials of 7p and 8p) being printed following the failed printed material are discharged to the discharge tray 40T of the post-processing device 40, the page order of the printed materials is shifted in the discharge tray 40T.

However, as described above, in a case where a printed material having an inspection result of fail is generated during continuous printing, and not only the failed printed material but also all the printed materials being printed following the failed printed material are discharged to the purge tray 30T, the amount of paper to be discarded (amount of waste paper) is increased as compared with a case where only the failed printed material is discharged to the purge tray 30T.

In particular, since the printed material that is determined to fail by the inspection device 30 may be determined to fail again by the inspection device 30 at the time of reprinting, the amount of paper to be discarded may increase.

In addition, in a case where a printed material having an inspection result of fail is generated in the inspection device 30 as the paper transport path from the accommodation tray 20T to the inspection device 30 is longer, the number of sheets of paper discharged to the purge tray 30T is increased.

Further, in a case where a printed material having an inspection result of fail is generated in the inspection device 30 as the transport speed of the paper increases, the number of sheets of paper remaining in the paper transport path from the accommodation tray 20T to the inspection device 30 increases, so that the number of sheets of paper discharged to the purge tray 30T increases. In addition, in a case where a printed material having an inspection result of fail is generated in the inspection device 30, not only the amount of paper to be discarded but also the amount of toner used for printing and the printing time are increased.

Therefore, in the image forming system 10 according to the present exemplary embodiment, in the inspection device 30, in a case where a printed material having an inspection result of fail is generated, the continuous printing is stopped, and only the failed printed material is reprinted. In the inspection device 30, in a case where the inspection result of the reprinted printed material is pass, a subsequent printed material following the passed reprinted material is printed. Hereinafter, the image forming system 10 according to the present exemplary embodiment will be described in detail.

### (Hardware Configuration of Image Forming System)

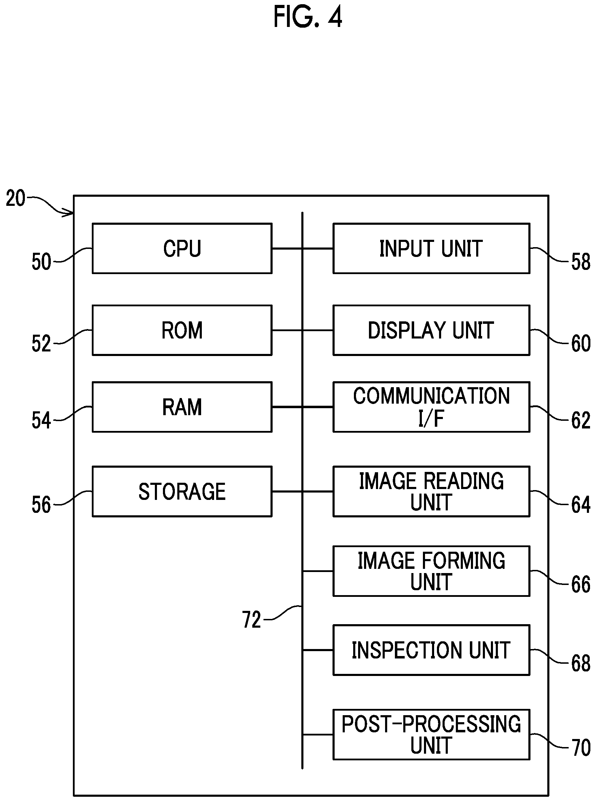

First, a hardware configuration of the image forming system 10 will be described. It should be noted that, in the following, for convenience of description, a hardware configuration of the image forming system 10 will be described, but the printing device 20, the inspection device 30, and the post-processing device 40 may separately include the hardware configuration as shown in Fig. 4.

As shown in Fig. 4, the image forming system 10 has components including a central processing unit (CPU) 50, a read only memory (ROM) 52, a random access memory (RAM) 54, a storage 56, an input unit 58, a display unit 60, a communication interface (I/F) 62, an image reading unit 64, an image forming unit 66, an inspection unit 68, and a post-processing unit 70. The configurations are connected to each other via a bus 72 in a communicable manner.

The CPU 50 is a central processing unit and executes various programs or controls each unit. That is, the CPU 50 reads out a program from the ROM 52 or the storage 56 and executes the program using the RAM 54 as a work area. The CPU 50 controls each of the above-described configurations and performs various types of arithmetic processing according to the program recorded on the ROM 52 or the storage 56. In addition, the CPU 50 is an example of a processor.

The ROM 52 stores various information processing programs and various types of data. The RAM 54 temporarily stores the program or the data as the work area of the CPU 50.

The storage 56 is configured with a hard disk drive (HDD) or a solid state drive (SSD), and stores various programs including an operating system and various types of data. In addition, the storage 56 stores a response processing program.

The input unit 58 includes an operation button or the like and is used to perform various inputs. The display unit 60 is, for example, a liquid crystal display and displays various types of information. The display unit 60 may be a touch panel type and may function as the input unit.

The communication I/F 62 is an interface for communication with other apparatuses. For example, a standard, such as Ethernet (Registered Trademark), FDDI, or Wi-Fi (Registered Trademark), is used.

The image reading unit 64 includes a scanner or the like and optically reads image data from a document or the like. The image forming unit 66 prints the image data read by the image reading unit 64 or the image data received from an operation terminal (not shown) on a recording medium such as paper.

The inspection unit 68 includes a scanner or the like, and optically reads image data from the paper (printed material) on which the image is printed by the image forming unit 66.

The post-processing unit 70 includes various post-processing mechanisms such as a folding processing mechanism of a recording medium such as paper, a stapling processing mechanism, a punch hole processing mechanism, and a booklet manufacturing processing mechanism, and performs a post-process on the printed material inspected by the inspection device 30.

### (Function of Image Forming System)

Next, functions of the image forming system 10 will be described.

In a case where the information processing program described above is executed, the image forming system 10 implements various functions of the printing device 20, the inspection device 30, and the post-processing device 40 by using the above hardware resources.

### (Printing Device)

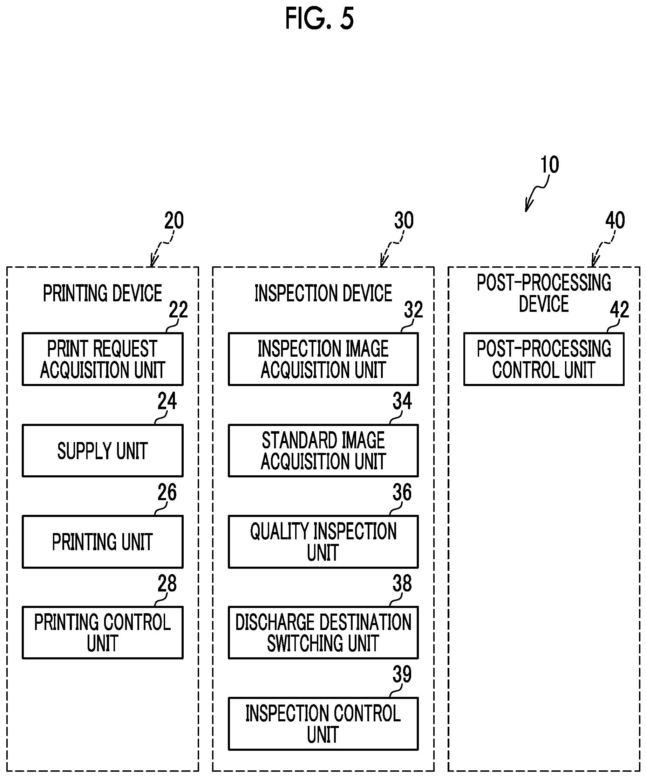

Specifically, as shown in Fig. 5, the printing device 20 functionally includes a print request acquisition unit 22, a supply unit 24, a printing unit 26, and a printing control unit 28.

The print request acquisition unit 22 acquires, for example, information (print data) of the print image input to the image forming system 10 or a print request (print job) such as a paper size and the number of printed sheets of paper.

The supply unit 24 supplies, to the printing unit 26, the paper accommodated in the predetermined accommodation tray 20T among the plurality of accommodation trays 20T. The printing unit 26 prints an image on the paper supplied from the supply unit 24.

### (Continuous Printing)

The printing control unit 28 controls the overall operation of the printing device 20, and executes continuous printing in which an image is printed on each of a plurality of sheets of paper accommodated in the accommodation tray 20T and the plurality of printed materials are sequentially supplied to the inspection device 30.

Specifically, the printing control unit 28 controls the supply unit 24 based on the print request acquired by the print request acquisition unit 22 to sequentially supply the plurality of sheets of paper from the predetermined accommodation tray 20T to the printing unit 26 among the plurality of accommodation trays 20T. In addition, the printing control unit 28 transmits the print data to be printed on the plurality of sheets of paper to the printing unit 26. Then, the printing control unit 28 causes the printing unit 26 to print the image based on the print data on each of the plurality of sheets of paper supplied from the accommodation tray 20T, and sequentially supplies the plurality of printed materials from the printing unit 26 to the inspection device 30.

In addition, in the continuous printing, the printing control unit 28 transmits the print data for performing printing on each of the plurality of sheets of paper to an inspection control unit 39 in the inspection device 30 described below.

### (Reprinting)

For example, as shown in Fig. 2, in a case where in the inspection device 30, a printed material (printed material of 6p) having an inspection result of fail is generated, the printing control unit 28 stops the continuous printing of the printed material and executes reprinting of only the printed material (printed material of 6p) having an inspection result of fail.

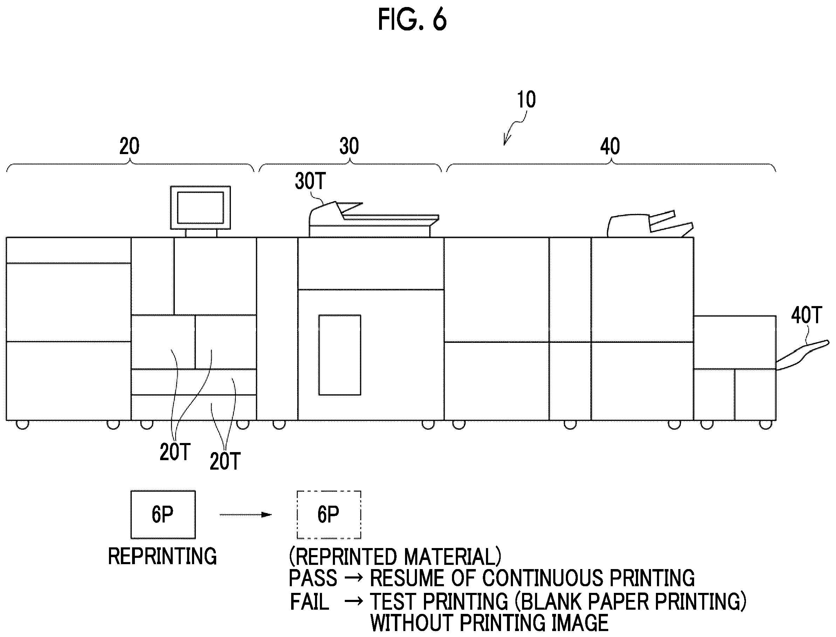

Specifically, as shown in Fig. 6, the printing control unit 28 controls the supply unit 24 based on the inspection result received from the inspection control unit 39 described below, and supplies one sheet of paper from a predetermined accommodation tray 20T among the plurality of accommodation trays 20T to the printing unit 26. Then, the printing control unit 28 causes the printing unit 26 to reprint the image of which the inspection result is fail on one sheet of paper supplied from the accommodation tray 20T, and supplies the reprinted material (reprinted material of 6p) that is reprinted, from the printing unit 26 to the inspection device 30.

In a case where the inspection result of the reprinted material by the inspection device 30 is passed, the printing control unit 28 resumes the continuous printing of the subsequent printed materials following the reprinted material.

### (Test Printing)

In a case where the inspection result of the reprinted material (reprinted material of 6p) is fail in the inspection device 30 described below, the printing control unit 28 executes test printing (blank paper printing) in which no image is printed on the paper accommodated in the accommodation tray 20T and the paper is supplied to the inspection device 30. The test printing is defined as pseudo-printing in which an image is not printed on paper, and is used to determine whether the cause of the fail is the paper itself or the printing device 20 in a case where the inspection result of the inspection device 30 is fail.

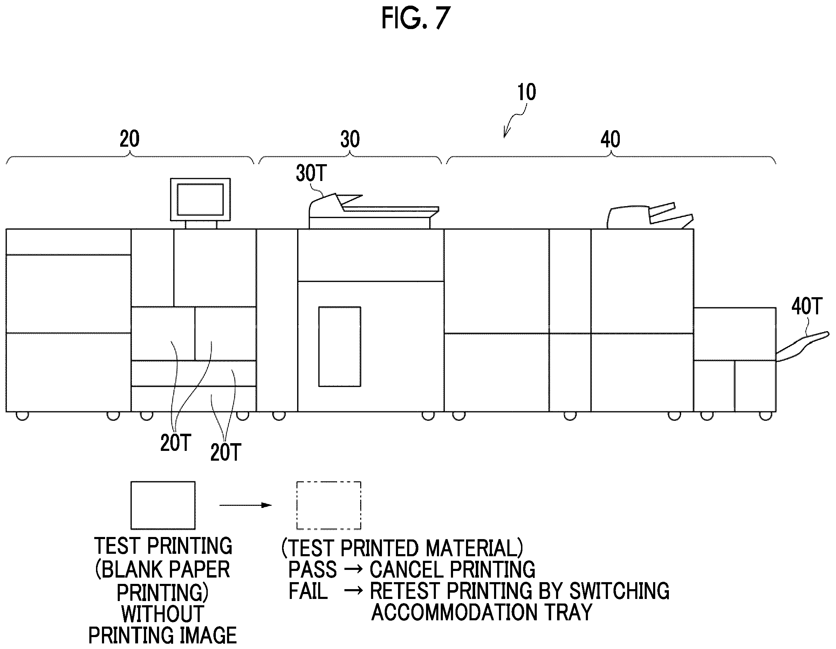

Specifically, as shown in Fig. 7, in the test printing, the printing control unit 28 controls the supply unit 24 to supply the paper from the predetermined accommodation tray 20T, among the plurality of accommodation trays 20T to the printing unit 26. In addition, the printing control unit 28 transmits test data (blank paper data) having no print data to the printing unit 26, and causes the printing unit 26 to not print an image on the paper supplied from the accommodation tray 20T but to supply the paper as a test printed material to the inspection device 30. The test printed material is inspected by the inspection device 30 and then discharged into the purge tray 30T.

In addition, in the test printing, the printing control unit 28 transmits information on the test image (blank paper image) having no print data to the inspection control unit 39 in the inspection device 30 described later.

### (Retest Printing)

In the test printing of the test printed material, in a case where the inspection result of the test printed material is fail, the printing control unit 28 executes retest printing of switching the accommodation tray 20T and performing the test printing again in the inspection device 30 described below.

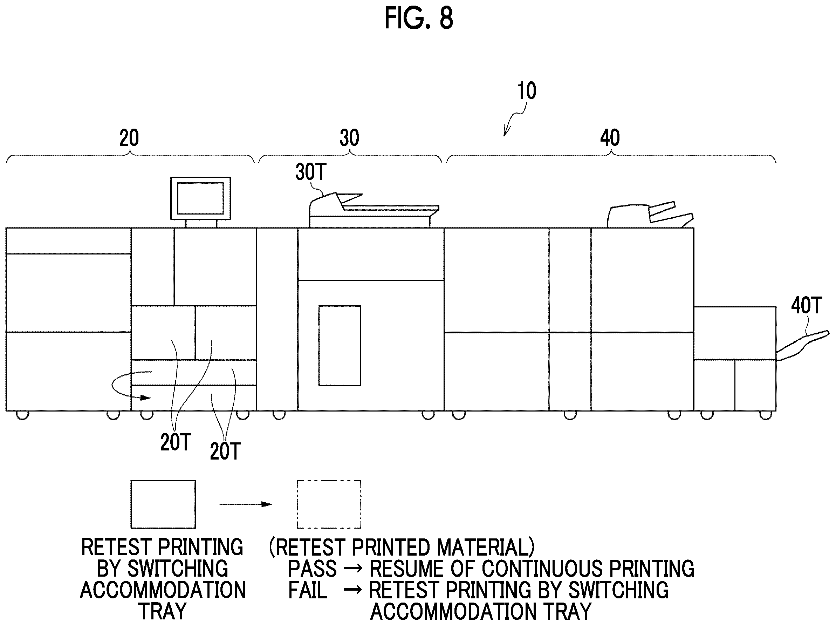

Specifically, as shown in Fig. 8, in the retest printing, in a case where there is another accommodation tray 20T which is different from the one accommodation tray 20T used for the test printed material having the inspection result of fail and in which paper of the same size and the same type as the paper accommodated in the one accommodation tray 20T is accommodated, the printing control unit 28 controls the supply unit 24 to supply the paper from the other accommodation tray 20T to the printing unit 26.

In addition, in the same manner as in the test printing, the printing control unit 28 causes the printing unit 26 to not print an image on the paper supplied from the accommodation tray 20T but to supply the paper as a retest printed material to the inspection device 30. The retest printed material is inspected by the inspection device 30 and then discharged into the purge tray 30T.

For convenience of description, the second and subsequent test printings are referred to as retest printings, and the test printed materials printed by the second and subsequent test printings are all referred to as retest printed materials.

### (Inspection Device)

The inspection device 30 functionally includes an inspection image acquisition unit 32, a standard image acquisition unit 34, a quality inspection unit 36, a discharge destination switching unit 38, and an inspection control unit 39.

The inspection image acquisition unit 32 scans an image from a printed material printed by the printing unit 26, and generates an inspection image such as a rasterized image based on the scanned image.

The standard image acquisition unit 34 receives the print data or the test data transmitted from the printing control unit 28 as the standard image.

The quality inspection unit 36 compares the inspection image read by the inspection image acquisition unit 32 with the standard image received by the standard image acquisition unit 34 to determine whether or not there is an abnormality in the printed material, that is, whether the printing quality of the printed material is pass or fail.

Specifically, the quality inspection unit 36 compares the inspection image with a standard image to determine whether or not there is an abnormality such as a corner folding, printing contamination, or misalignment. In a case where it is determined that there is no abnormality in the printed material, the quality inspection unit 36 determines the printed material as pass. In a case where it is determined that there is an abnormality in the printed material, the quality inspection unit 36 determines the printed material as fail.

The discharge destination switching unit 38 switches the discharge destination of the printed material inspected by the quality inspection unit 36 between the post-processing device 40 and the purge tray 30T.

The inspection control unit 39 controls the operation of the entire inspection device 30. Specifically, the inspection control unit 39 causes the quality inspection unit 36 to inspect the printing quality of the printed material or the reprinted material. In a case where the printing quality of the printed material or the reprinted material is passed by the quality inspection unit 36, the inspection control unit 39 causes the discharge destination switching unit 38 to switch the discharge destination of the printed material or the reprinted material to the post-processing device 40.

On the other hand, in a case where the inspection result of the printed material or the reprinted material by the quality inspection unit 36 is fail, the inspection control unit 39 switches the discharge destination of the printed material or the reprinted material to the purge tray 30T by the discharge destination switching unit 38.

Further, the inspection control unit 39 causes the quality inspection unit 36 to inspect the printing quality of the test printed material or the retest printed material. The inspection control unit 39 switches the test printed material or the retest printed material is switched to the purge tray 30T by the discharge destination switching unit 38.

In addition, the inspection control unit 39 transmits information such as the inspection result by the quality inspection unit 36 and the number of pages (page numbers) of the printed materials determined to be failed to the printing control unit 28.

### (Post-Processing Device)

The post-processing device 40 functionally includes a post-processing control unit 42. The post-processing control unit 42 controls the operation of the entire post-processing device 40. Specifically, the post-processing control unit 42 controls various post-processing mechanisms, such as a folding processing mechanism, a stapling processing mechanism, a punch hole processing mechanism, and a booklet making processing mechanism, and performs a post-process on the printed material supplied from the inspection device 30.

The printing control unit 28, the inspection control unit 39, and the post-processing control unit 42 control the overall operation of the image forming system 10 in cooperation with each other by transmitting and receiving information to and from each other.

### (Printing Inspection Process of Image Forming System)

Next, a printing inspection process by the image forming system 10 will be described.

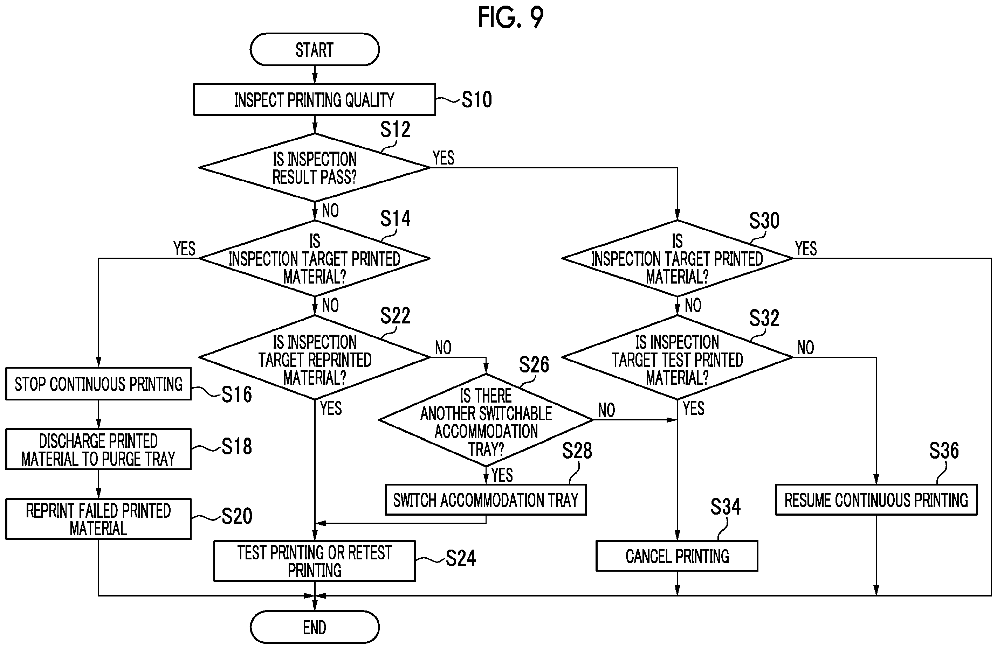

In the image forming system 10, in a case where continuous printing of a plurality of printed materials is executed and the printed material printed by the printing device 20 is supplied to the inspection device 30, the print inspection process shown in Fig. 9 is executed in the image forming system 10. The printing inspection process is an example of a printing inspection processing method.

First, in step S10, the CPU 50 inspects the printing quality of the printed material, the reprinted material, the test printed material, or the retest printed material.

Next, in step S12, the CPU 50 determines whether the inspection result of the printing quality is pass or fail. Then, in a case where the inspection result is fail, the CPU 50 transitions to step S14.

Next, in step S14, the CPU 50 determines whether or not the inspection target is the printed material. Then, in a case where the CPU 50 determines that the inspection target is the printed material, the CPU 50 transitions to step S16.

Next, in step S16, the CPU 50 stops the continuous printing.

Next, in step S18, the CPU 50 discharges the printed material having the inspection result of fail and all the printed materials being printed following the printed material to the purge tray 30T.

Next, in step S20, the CPU 50 executes the reprinting of printing only the printed material having the inspection result of fail and ends the process.

On the other hand, in step S14, in a case where the CPU 50 determines that the inspection target is not the printed material, the CPU 50 transitions to step S22.

Next, in step S22, the CPU 50 determines whether or not the inspection target is the reprinted material. Then, in a case where the CPU 50 determines that the inspection target is the reprinted material, the CPU 50 transitions to step S24.

Next, in step S24, the CPU 50 executes test printing (blank paper printing) of not printing an image on the paper and ends the process.

In the first test printing, the inspection device 30 is supplied with paper from the accommodation tray 20T used for the printed material and the reprinted material having the inspection result of fail via the printing device 20. That is, the CPU 50 executes test printing on the paper accommodated in the same accommodation tray 20T as the accommodation tray 20T of the paper used for the printed material and the reprinted material having the inspection result of fail. In this case, in the printing device 20, the image is not printed on the paper.

On the other hand, in step S22, in a case where the CPU 50 determines that the inspection target is not the reprinted material, that is, the inspection target is the test printed material or the retest printed material, the CPU 50 transitions to step S26.

Next, in step S26, the CPU 50 determines whether or not there is another switchable accommodation tray 20T among the plurality of accommodation trays 20T.

Specifically, the CPU 50 determines whether or not there is another accommodation tray 20T which is different from the one accommodation tray 20T used for the test printed material having the inspection result of fail and in which paper having the same size and of the same type as the paper accommodated in the one accommodation tray 20T is accommodated. Then, in a case where the CPU 50 determines that there is another switchable accommodation tray 20T, the CPU 50 transitions to step S28.

Next, in step S28, the CPU 50 switches the accommodation tray used for the retest printing from one accommodation tray 20T to another accommodation tray 20T, and transitions to step S24. In step S24, the CPU 50 executes the retest printing.

On the other hand, in step S26, in a case where the CPU 50 determines that there is no other switchable accommodation tray 20T, the CPU 50 transitions to step S34 which will be described later. In this step S26, in a case where the inspection result of the test printed material is fail, the retest printing is performed until there are no more switchable accommodation trays 20T.

In addition, in step S12 described above, in a case where the CPU 50 determines that the inspection result of the printing quality is pass, the CPU 50 transitions to step S30.

Next, in step S30, the CPU 50 determines whether or not the inspection target is the printed material. Then, in a case where the CPU 50 determines that the inspection target is the printed material, the process ends.

On the other hand, in step S30, in a case where the CPU 50 determines that the inspection target is not the printed material, the CPU 50 transitions to step S32.

Next, in step S32, the CPU 50 determines whether or not the inspection target is the test printed material. Then, in a case where the CPU 50 determines that the inspection target is the test printed material, the CPU 50 transitions to step S34.

Next, in step S34, the CPU 50 cancels the printing, and ends the process. This is because in a case where the inspection result of the test printed material is pass, the paper is not abnormal, and there is a high possibility that the cause of the fail of the inspection result of the printed material and the reprinted material is in the printing device 20.

On the other hand, in step S32, in a case where the CPU 50 determines that the inspection target is not the test printed material, that is, the inspection target is the reprinted material or the retest printed material, the CPU 50 transitions to step S36.

Next, in step S36, the CPU 50 resumes continuous printing from the printed material having the inspection result of fail and ends the process. That is, the CPU 50 performs continuous printing of the printed material having an inspection result of fail and subsequent printed materials following the printed material, and ends the process.

In a case where the inspection target is the retest printed material in step S32, the CPU 50 resumes continuous printing on the paper accommodated in another accommodation tray 20T switched from the one accommodation tray 20T in step S36.

### (Modification Example)

Next, modification examples of the above-described exemplary embodiment will be described.

In the above-described exemplary embodiment, in the retest printing, the one accommodation tray 20T used for the test printed material having the inspection result by the inspection device 30 of fail is switched to another accommodation tray 20T in which paper having the same size and the same type as the paper accommodated in the one accommodation tray 20T is accommodated. However, in the retest printing, the one accommodation tray 20T used for the test printed material having the inspection result of fail may be switched to another accommodation tray 20T in which paper having a different size or a different type from the paper accommodated in the one accommodation tray 20T is accommodated. In addition, the test printing may be omitted.

In addition, in the above-described exemplary embodiment, in the test printing, the accommodation tray 20T is not switched to another accommodation tray 20T, and the same accommodation tray 20T as the accommodation tray 20T of the paper used for the printed material having the inspection result of fail is used. That is, in the above-described exemplary embodiment, test printing is performed on the paper accommodated in the same accommodation tray 20T as the accommodation tray 20T of the paper used for the printed material having the inspection result of fail. However, in the test printing, the accommodation tray 20T may be switched to another accommodation tray 20T. In addition, the retest printing may be omitted.

In addition, in the above-described exemplary embodiment, in a case where a printed material having the inspection result by the inspection device 30 is fail is generated, test printing may be performed after repeating the reprinting a predetermined number of times.

In addition, in the above-described exemplary embodiment, in a case where the inspection result of the reprinted material by the inspection device 30 is pass, the reprinting of the subsequent printed materials following the reprinted material is resumed. However, in a case where the inspection result of the reprinted material by the inspection device 30 is pass, for example, the inspection result by the inspection device 30 may be determined each time one subsequent printed material is printed, and in a case where a predetermined number of the inspection results are continuous, the subsequent printed materials may be switched to continuous printing.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In the above exemplary embodiment, the mode in which each program is installed in the ROM or the storage has been described, but the present invention is not limited to this. Each program according to the above exemplary embodiment may be provided in the form of a recording on a computer readable storage medium. For example, each program according to the above exemplary embodiment may be provided in the form of a recording on an optical disc such as a compact disc (CD)-ROM and a digital versatile disc (DVD)-ROM or in the form of a recording on a semiconductor memory such as a universal serial bus (USB) memory and a memory card. Further, each program according to the above-described exemplary embodiment may be acquired from an external apparatus via a communication I/F.

In addition, in the exemplary embodiment described above, a case where the processing in the image forming system 10 is implemented by a software configuration by using a computer by executing a program is described, but the present disclosure is not limited thereto. For example, the processing in the image forming system 10 may be implemented by a hardware configuration or a combination of the hardware configuration and the software configuration.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: image forming system (information processing system, information processing apparatus)
20T: accommodation tray (accommodation unit)
30T: purge tray (fail discharge unit)
40T: discharge tray (pass discharge unit)
50: CPU (processor)

## Claims

1. An information processing system (10) comprising:
a processor (50) configured to:
perform continuous printing of a plurality of printed materials while inspecting printing quality;
in a case where a printed material having an inspection result of fail is generated, stop the continuous printing of the printed materials and reprint the failed printed material; and
in a case where an inspection result of the reprinted printed material is pass, print a subsequent printed material following the passed reprinted material; the information processing system (10) being **characterized in that** the processor is further configured to:
in a case where the inspection result of the reprinted material is fail, perform a test printing of a test printed material without printing an image on a recording medium; and
cancel the printing of the subsequent printed material, in a case where an inspection result of the test printed material by the test printing is pass.

2. The information processing system (10) according to claim 1, wherein the processor (50) is configured to:
perform the test printing on a recording medium that is accommodated in the same accommodation unit (20T) as an accommodation unit (20T) of the recording medium used for the failed printed material.

3. The information processing system (10) according to claim 1 or 2, wherein the processor (50) is configured to:
in a case where the inspection result of the test printed material is fail, perform retest printing without printing an image on a recording medium that is accommodated in another accommodation unit (20T) different from one accommodation unit (20T) in which the recording medium used for the test printing is accommodated; and
in a case where an inspection result of a retest printed material by the retest printing is pass, print the subsequent printed material by using the recording medium accommodated in the other accommodation unit (20T).

4. The information processing system (10) according to claim 3, wherein the processor (50) is configured to:
set, as the other accommodation unit (20T), an accommodation unit (20T) in which a recording medium having the same size and the same type as the recording medium accommodated in the one accommodation unit (20T) is accommodated.

5. The information processing system (10) according to claim 3 or 4, wherein the processor (50) is configured to:
in a case where the inspection result of the test printed material is fail, perform the retest printing until there are no more other accommodation units (20T).

6. The information processing system (10) according to any one of claims 1 to 5, wherein the processor (50) is configured to:
discharge a printed material having the inspection result of pass to a pass discharge unit (40T);
discharge the printed material having the inspection result of fail and a printed material being printed following the failed printed material to a fail discharge unit (30T);
discharge the reprinted material having the inspection result of pass to the pass discharge unit (40T); and
discharge the reprinted material having the inspection result of fail to the fail discharge unit (30T).

7. The information processing system (10) according to claim 6, wherein the processor (50) is configured to:
discharge the subsequent printed material having an inspection result of pass to the pass discharge unit (40T); and
in a case where the subsequent printed material having the inspection result of fail is generated, discharge the failed subsequent printed material and the printed material being printed following the failed subsequent printed material to the fail discharge unit (30T), and stop the printing of the subsequent printed material.

8. The information processing system (10) according to any one of claims 1 to 7, wherein the processor (50) is configured to:
determine an inspection result of the subsequent printed material for each printing of the subsequent printed material; and
in a case where a predetermined number of subsequent printed materials having the inspection result of pass are continuous, perform continuous printing of the subsequent printed material following the passed subsequent printed materials.

9. An information processing program comprising instructions which, when the program is executed by a computer, cause the computer to execute a process comprising:
performing continuous printing of a plurality of printed materials while inspecting printing quality;
stopping, in a case where a printed material having an inspection result of fail is generated, the continuous printing of the printed materials and reprinting the failed printed material; and
printing, in a case where an inspection result of the reprinted printed material is pass, a subsequent printed material following the passed reprinted material; the program being **characterized in** causing the computer to execute:
in a case where the inspection result of the reprinted material is fail, performing a test printing of a test printed material without printing an image on a recording medium; and
cancelling the printing of the subsequent printed material, in a case where an inspection result of the test printed material by the test printing is pass.

10. An information processing method comprising:
performing continuous printing of a plurality of printed materials while inspecting printing quality;
stopping, in a case where a printed material having an inspection result of fail is generated, the continuous printing of the printed materials and reprinting the failed printed material; and
printing, in a case where an inspection result of the reprinted printed material is pass, a subsequent printed material following the passed reprinted material; the method being **characterized in** further comprising:
in a case where the inspection result of the reprinted material is fail, performing a test printing of a test printed material without printing an image on a recording medium; and
cancelling the printing of the subsequent printed material, in a case where an inspection result of the test printed material by the test printing is pass.

## Patentansprüche

1. Informationsverarbeitungssystem (10), umfassend:
einen Prozessor (50), der so konfiguriert ist, dass er:
kontinuierliches Drucken von mehreren gedruckten Materialien durchführt, während er Druckqualität überprüft;
in einem Fall, in dem ein gedrucktes Material mit einem Inspektionsergebnis von "fehlgeschlagen" erzeugt wird, das kontinuierliche Drucken der gedruckten Materialien stoppt und das fehlgeschlagene gedruckte Material erneut druckt; und
in einem Fall, in dem ein Inspektionsergebnis des gedruckten Materials, das erneut gedruckt wurde, "bestanden" ist, ein nachfolgendes gedrucktes Material, das dem bestandenen erneut gedruckten Material folgt, druckt; wobei das Informationsverarbeitungssystem (10) **dadurch gekennzeichnet ist, dass** der Prozessor ferner so konfiguriert ist, dass er:
in einem Fall, in dem das Inspektionsergebnis des erneut gedruckten Materials "fehlgeschlagen" ist, einen Testdruck eines zum Test gedruckten Materials, ohne ein Bild auf einem Aufzeichnungsmedium zu drucken, durchführt; und
das Drucken des nachfolgenden gedruckten Materials, in einem Fall, in dem ein Inspektionsergebnis des zum Test gedruckten Materials durch den Testdruck "bestanden" ist, abbricht.

2. Informationsverarbeitungssystem (10) nach Anspruch 1, wobei der Prozessor (50) so konfiguriert ist, dass er:
den Testdruck an einem Aufzeichnungsmedium, das in der gleichen Aufnahmeeinheit (20T) wie eine Aufnahmeeinheit (20T) des Aufzeichnungsmediums, das für das fehlgeschlagene gedruckte Material verwendet wird, aufgenommen ist, durchführt.

3. Informationsverarbeitungssystem (10) nach Anspruch 1 oder 2, wobei der Prozessor (50) so konfiguriert ist, dass er:
in einem Fall, in dem das Inspektionsergebnis des zum Test gedruckten Materials "fehlgeschlagen" ist, Drucken zum erneuten Test durchführt, ohne ein Bild auf einem Aufzeichnungsmedium, das in einer weiteren Aufnahmeeinheit (20T), die sich von einer Aufnahmeeinheit (20T) unterscheidet, in der das für den Testdruck verwendete Aufzeichnungsmedium aufgenommen ist, aufzunehmen; und
in einem Fall, in dem ein Inspektionsergebnis eines gedruckten Materials zum erneuten Test durch das Drucken zum erneuten Test "bestanden" ist, das nachfolgende gedruckte Material durch Verwenden des Aufzeichnungsmediums, das in der weiteren Aufnahmeeinheit (20T) aufgenommen ist, druckt.

4. Informationsverarbeitungssystem (10) nach Anspruch 3, wobei der Prozessor (50) so konfiguriert ist, dass er:
als die weitere Aufnahmeeinheit (20T) eine Aufnahmeeinheit (20T), in der ein Aufzeichnungsmedium mit der gleichen Größe und dem gleichen Typ wie das in der einen Aufnahmeeinheit (20T) aufgenommene Aufzeichnungsmedium aufgenommen ist, einstellt.

5. Informationsverarbeitungssystem (10) nach Anspruch 3 oder 4, wobei der Prozessor (50) so konfiguriert ist, dass er:
in einem Fall, in dem das Inspektionsergebnis des zum Test gedruckten Materials "fehlgeschlagen" ist, das Drucken zum erneuten Test durchführt, bis es keine weiteren Aufnahmeeinheiten (20T) mehr gibt.

6. Informationsverarbeitungsvorrichtung (10) nach einem der Ansprüche 1 bis 5, wobei der Prozessor (50) so konfiguriert ist, dass er:
ein gedrucktes Material mit dem Inspektionsergebnis von "bestanden" an eine Abgabeeinheit (40T) für "bestanden" abgibt;
das gedruckte Material mit dem Inspektionsergebnis von "fehlgeschlagen" und ein gedrucktes Material, das nach dem fehlgeschlagenen gedruckten Material gedruckt wird, an eine Abgabeeinheit (30T) für "fehlgeschlagen" abgibt;
das erneut gedruckte Material mit dem Inspektionsergebnis von "bestanden" an die Abgabeeinheit (40T) für "bestanden" abgibt; und
das erneut gedruckte Material mit dem Inspektionsergebnis von "fehlgeschlagen" an die Abgabeeinheit (30T) für "fehlgeschlagen" abgibt.

7. Informationsverarbeitungssystem (10) nach Anspruch 6, wobei der Prozessor (50) so konfiguriert ist, dass er:
das nachfolgende gedruckte Material mit einem Inspektionsergebnis von "bestanden" an die Abgabeeinheit (40T) für "bestanden" abgibt; und
in einem Fall, in dem das nachfolgende gedruckte Material mit dem Inspektionsergebnis von "fehlgeschlagen" erzeugt wird, das fehlerhafte nachfolgende gedruckte Material und das gedruckte Material, das nach dem fehlerhaften nachfolgenden gedruckten Material gedruckt wird, an die Abgabeeinheit (30T) für "fehlgeschlagen" abgibt und das Drucken des nachfolgenden gedruckten Materials stoppt.

8. Informationsverarbeitungsvorrichtung (10) nach einem der Ansprüche 1 bis 7, wobei der Prozessor (50) so konfiguriert ist, dass er:
ein Inspektionsergebnis des nachfolgenden gedruckten Materials für jeden Druck des nachfolgenden gedruckten Materials bestimmt; und
in einem Fall, in dem eine vorbestimmte Anzahl an nachfolgenden gedruckten Materialien mit dem Inspektionsergebnis von "bestanden" kontinuierlich ist, kontinuierliches Drucken des nachfolgenden gedruckten Materials, das den bestandenen nachfolgenden gedruckten Materialien folgt, durchführt.

9. Informationsverarbeitungsprogramm, umfassend Anweisungen, die, wenn das Programm von einem Computer ausgeführt wird, den Computer veranlassen, einen Prozess auszuführen, der umfasst:
Durchführen von kontinuierlichem Drucken von mehreren gedruckten Materialien, während Druckqualität überprüft wird;
in einem Fall, in dem ein gedrucktes Material mit einem Inspektionsergebnis von "fehlgeschlagen" erzeugt wird, Stoppen des kontinuierlichen Druckens der gedruckten Materialien und erneutes Drucken des fehlgeschlagenen gedruckten Materials; und
in einem Fall, in dem ein Inspektionsergebnis des gedruckten Materials, das erneut gedruckt wurde, "bestanden" ist, Drucken eines nachfolgenden gedruckten Materials, das dem bestandenen erneut gedruckten Material folgt; wobei das Programm **dadurch gekennzeichnet ist, dass** es den Computer veranlasst, auszuführen:
in einem Fall, in dem das Inspektionsergebnis des erneut gedruckten Materials "fehlgeschlagen" ist, Durchführen eines Testdrucks eines zum Test gedruckten Materials, ohne ein Bild auf einem Aufzeichnungsmedium zu drucken; und
Abbrechen des Druckens des nachfolgenden gedruckten Materials, in einem Fall, in dem ein Inspektionsergebnis des zum Test gedruckten Materials durch den Testdruck "bestanden" ist.

10. Informationsverarbeitungsverfahren, umfassend:
Durchführen von kontinuierlichem Drucken von mehreren gedruckten Materialien, während Druckqualität überprüft wird;
in einem Fall, in dem ein gedrucktes Material mit einem Inspektionsergebnis von "fehlgeschlagen" erzeugt wird, Stoppen des kontinuierlichen Druckens der gedruckten Materialien und erneutes Drucken des fehlgeschlagenen gedruckten Materials; und
in einem Fall, in dem ein Inspektionsergebnis des gedruckten Materials, das erneut gedruckt wurde, "bestanden" ist, Drucken eines nachfolgenden gedruckten Materials, das dem bestandenen erneut gedruckten Material folgt; wobei das Verfahren **dadurch gekennzeichnet ist, dass** er ferner umfasst:
in einem Fall, in dem das Inspektionsergebnis des erneut gedruckten Materials "fehlgeschlagen" ist, Durchführen eines Testdrucks eines zum Test gedruckten Materials, ohne ein Bild auf einem Aufzeichnungsmedium zu drucken; und
Abbrechen des Druckens des nachfolgenden gedruckten Materials, in einem Fall, in dem ein Inspektionsergebnis des zum Test gedruckten Materials durch den Testdruck "bestanden" ist.

## Revendications

1. Système de traitement d'informations (10) comprenant :
un processeur (50) configuré pour :
effectuer une impression continue d'une pluralité de matériaux imprimés tout en inspectant une qualité d'impression ;
dans un cas où un matériau imprimé ayant un résultat d'inspection d'échec est généré, arrêter l'impression continue des matériaux imprimés et réimprimer le matériau imprimé ayant échoué ; et
dans un cas où un résultat d'inspection du matériau imprimé réimprimé est réussite, imprimer un matériau imprimé suivant après le matériau réimprimé ayant réussi ; le système de traitement d'informations (10) étant **caractérisé en ce que** le processeur est en outre configuré pour :
dans un cas où le résultat d'inspection du matériau réimprimé est échec, effectuer une impression de test d'un matériau imprimé de test sans imprimer une image sur un support d'enregistrement ; et
annuler l'impression du matériau imprimé suivant, dans un cas où un résultat d'inspection du matériau imprimé de test par l'impression de test est réussite.

2. Système de traitement d'informations (10) selon la revendication **l,** dans lequel le processeur (50) est configuré pour :
effectuer l'impression de test sur un support d'enregistrement qui est accommodé dans le même unité d'accommodation (20T) qu'une unité d'accommodation (20T) du support d'enregistrement utilisé pour le matériau imprimé ayant échoué.

3. Système de traitement d'informations (10) selon la revendication 1 ou la revendication 2, dans lequel le processeur (50) est configuré pour :
dans un cas où le résultat d'inspection du matériau imprimé de test est échec, effectuer une impression de nouveau test sans imprimer une image sur un support d'enregistrement qui est accommodé dans une autre unité d'accommodation (20T) différente d'une unité d'accommodation (20T) dans laquelle le support d'enregistrement utilisé pour l'impression de test est accommodé ; et
dans un cas où un résultat d'inspection d'un matériau imprimé de nouveau test par l'impression de nouveau test est réussite, imprimer le matériau imprimé suivant en utilisant le support d'enregistrement accommodé dans l'autre unité d'accommodation (20T).

4. Système de traitement d'informations (10) selon la revendication 3, dans lequel le processeur (50) est configuré pour :
régler, comme l'autre unité d'accommodation (20T), une unité d'accommodation (20T) dans laquelle un support d'enregistrement ayant la même taille et le même type que le support d'enregistrement accommodé dans l'une unité d'accommodation (20T) est accommodé.

5. Système de traitement d'informations (10) selon la revendication 3 ou la revendication 4, dans lequel le processeur (50) est configuré pour :
dans un cas où le résultat d'inspection du matériau imprimé de test est échec, effectuer l'impression de nouveau test jusqu'à ce qu'il n'y ait plus d'autres unités d'accommodation (20T).

6. Système de traitement d'informations (10) selon l'une quelconque des revendications 1 à 5, dans lequel le processeur (50) est configuré pour :
évacuer un matériau imprimé ayant le résultat d'inspection de réussite à une unité d'évacuation de réussite (40T) ;
évacuer le matériau imprimé ayant le résultat d'inspection d'échec et un matériau imprimé étant imprimé après le matériau imprimé ayant échoué à une unité d'évacuation d'échec (30T) ;
évacuer le matériau réimprimé ayant le résultat d'inspection de réussite à l'unité d'évacuation de réussite (40T) ; et
évacuer le matériau réimprimé ayant le résultat d'inspection d'échec à l'unité d'évacuation d'échec (30T).

7. Système de traitement d'informations (10) selon la revendication 6, dans lequel le processeur (50) est configuré pour :
évacuer le matériau imprimé suivant ayant un résultat d'inspection de réussite à l'unité d'évacuation de réussite (40T) ; et
dans un cas où le matériau imprimé suivant ayant le résultat d'inspection d'échec est généré, évacuer le matériau imprimé suivant ayant échoué et le matériau imprimé étant imprimé après le matériau imprimé suivant ayant échoué à l'unité d'évacuation d'échec (30T), et arrêter l'impression du matériau imprimé suivant.

8. Système de traitement d'informations (10) selon l'une quelconque des revendications 1 à 7, dans lequel le processeur (50) est configuré pour :
déterminer un résultat d'inspection du matériau imprimé suivant pour chaque impression du matériau imprimé suivant ; et
dans un cas où un nombre prédéterminé de matériaux imprimés suivants ayant le résultat d'inspection de réussite sont continus, effectuer une impression continue du matériau imprimé suivant après les matériaux imprimés suivants ayant réussis.

9. Programme de traitement d'informations comprenant des instructions qui, lorsque le programme est exécuté par un ordinateur, amènent l'ordinateur à exécuter un processus comprenant :
effectuer une impression continue d'une pluralité de matériaux imprimés tout en inspectant une qualité d'impression ;
arrêter, dans un cas où un matériau imprimé ayant un résultat d'inspection d'échec est généré, l'impression continue des matériaux imprimés et réimprimer le matériau imprimé ayant échoué ; et
imprimer, dans un cas où un résultat d'inspection du matériau imprimé réimprimé est réussite, un matériau imprimé suivant après le matériau imprimé réimprimé ayant réussi ; le programme étant **caractérisé en ce qu'**il amène l'ordinateur à exécuter :
dans un cas où le résultat d'inspection du matériau réimprimé est échec, effectuer une impression de test d'un matériau imprimé de test sans imprimer une image sur un support d'enregistrement ; et
annuler l'impression du matériau imprimé suivant, dans un cas où un résultat d'inspection du matériau imprimé de test par l'impression de test est réussite.

10. Procédé de traitement d'informations comprenant :
effectuer une impression continue d'une pluralité de matériaux imprimés tout en inspectant une qualité d'impression ;
arrêter, dans un cas où un matériau imprimé ayant un résultat d'inspection d'échec est généré, l'impression continue des matériaux imprimés et réimprimer le matériau imprimé ayant échoué ; et
imprimer, dans un cas où un résultat d'inspection du matériau imprimé réimprimé est réussite, un matériau imprimé suivant après le matériau imprimé réimprimé ayant réussi ; le procédé étant **caractérisé en ce qu'**il comprend en outre :
dans un cas où le résultat d'inspection du matériau réimprimé est échec, effectuer une impression de test d'un matériau imprimé de test sans imprimer une image sur un support d'enregistrement ; et
annuler l'impression du matériau imprimé suivant, dans un cas où un résultat d'inspection du matériau imprimé de test par l'impression de test est réussite.
